# EUROPEAN PATENT APPLICATION

(11) **EP 0 966 873 A1**
(43) Date of publication of application: **29.12.1999**
(21) Application number: 99304947.7
(22) Date of filing: 23.06.1999
(51) Int. Cl.: A01B 61/04

(54) **Plough point mounting assembly**

(30) Priority: 27.06.1998 GB 9813880
(71) Applicant: Landforce Limited, Lincolnshire NG31 6JE (GB)
(72) Inventor: Skinner, Paul, Grantham, Lincolnshire, NG31 6JE (GB); Andrews, Mark Adrian, Grantham, Lincolnshire, NG31 6JE (GB)
(74) Representative: Sherrard-Smith, Hugh

(57) **Abstract**

A plough includes a plurality of legs 10 each of which supports a plough point (not shown). When one of the legs encounters a shock loading a shear bolt 20 breaks and the leg trails whilst remaining attached through a flexible link 14. When the leg 10 is bolted onto the leg clamp, the ploughing forces urge the leg to pivot about the bolt 20 in an anticlockwise direction. That movement is resisted by a surface 26 formed on the top of the leg abutting a horizontal face 28 of a bracket 29 welded to the rear side of the leg clamp 28.

## Description

The present invention relates to a power point mounting assembly and also to a method of using such an assembly.

During ploughing, a number of legs are rigidly connected to associated holders. Each holder is in turn connected to a common plough beam. Each leg has attached to its bottom portion, a foot, wing, point holder and point. The point is in advance of the holder. The point is pushed through the soil. When the point encounters an obstacle, such as a rock, the assembly is subject to a rearwards shock. This can damage the point or its associated parts severely by causing bending, buckling, twisting or breakage of those parts. Replacement is expensive and time consuming. Furthermore, the plough can be out of action for a considerable period, particularly if the damaged parts are not available on site. This is a particularly severe problem in ploughing that is dependent on the weather and the time of year.

It has been proposed previously to mount the leg pivotally on the holder with there being a further connection spaced from the pivot effected by a shear bolt. When the force on the point is sufficient to break the shear bolt, the leg assembly pivots rearwardly on the holder. As the pivot is rearward of the point, the point tends to dig further into the ground, or is dragged over the rock thereby raising the whole plough upwards. This movement or indeed whole weight of the plough on one holder and associated parts can damage those parts. Furthermore, it is inevitable that the pivot mounting will become clogged with soil and, alternatively or additionally corroded thereby making return of the leg for insertion of a new shear bolt (even should the other parts be undamaged) difficult if not impossible.

It is an object of the present invention to attempt to overcome at least some of the above described disadvantages.

According to one aspect of the present invention a plough point mounting assembly comprises upper and lower portions of the assembly being connected by a member that is arranged to fail when the assembly is subject to a significant force, the assembly also including connecting means that permit movement of the lower portion relative to the upper portion after failure of the member characterised in that the movement permits the lower portion to move out of the plane that it is constrained to be in prior to failure of the member.

The movement may be rotational or translational or both.

The connecting means may comprise a flexible means.

The lower portion may be arranged to trail the upper portion or may be loosely connected to the upper portion after failure of the member.

The two portions may be directly connected by the connecting means.

The portions may include cooperating abutment means arranged to resist relative rotational movement of the portions in at least one direction about the location that the member connects the portions. The abutment means may permit relative sliding movement of the portions after failure of the member which relative sliding movement may be in a linear direction and which relative sliding movement may be optional, or for only a short period of time after failure of the member.

The abutment means may be spaced from the member and may comprise a plate on one portion arranged to abut a projection on the other portion.

The abutment means may be arranged to resist relative rotational movement of the portions in a direction that would tend to move the lower portion of the assembly rearwardly and downwardly with respect to the other portion of the assembly and with respect to the intended direction of ploughing.

One of the portions may comprise a plough point leg and the other portion may comprise a plough point leg clamp.

The present invention also includes a method of using a plough point comprising upper and lower portions of the assembly that are normally securely connected together, the lower portion being arranged to move relative to the upper portion when the assembly is subject to a significant force such that lower portion moves out of the plane that it was constrained to be in prior to being subject to the significant force.

The movement may be rotational or translational or both.

The method may comprise connecting the portions flexibly together such that the portions can move in a translational and a rotational direction, after the portions have been subject to a significant force, and the portions may also be arranged to be able to move in directions that have components in three planes at right angles to each other, which relative movement may be both in a linear and also in a rotational movement about those three planes.

The method may comprise movement of two portions of a plough point assembly being restricted in one direction, prior to the portions being subjected to a significant impact, by abutment of those portions.

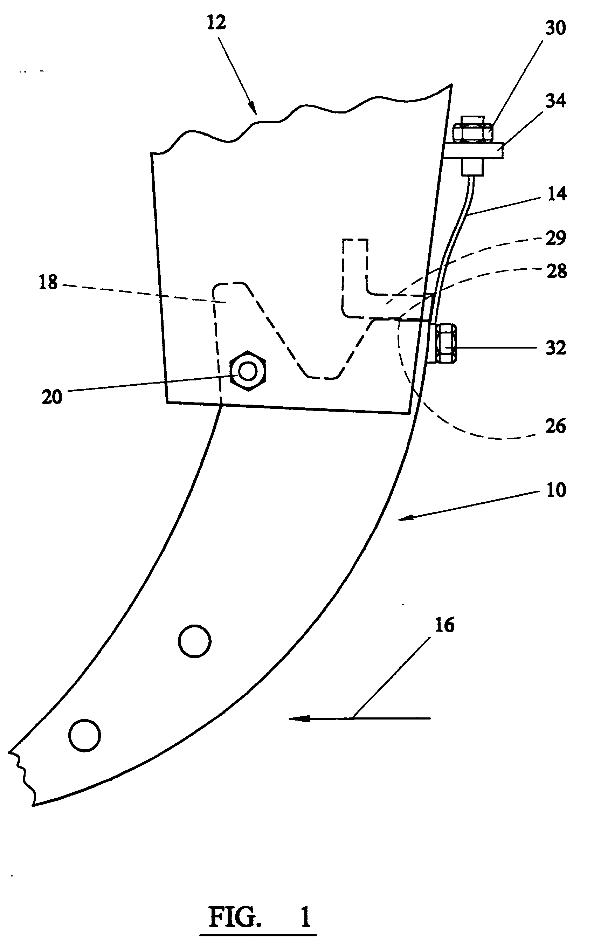

The present invention may be carried into practice in various ways but one embodiment will now be described, by way of example, and with reference to the accompanying drawings, in which:-
Figure 1 is a side view of a leg 10 and leg clamp 12 in an operative ploughing position;

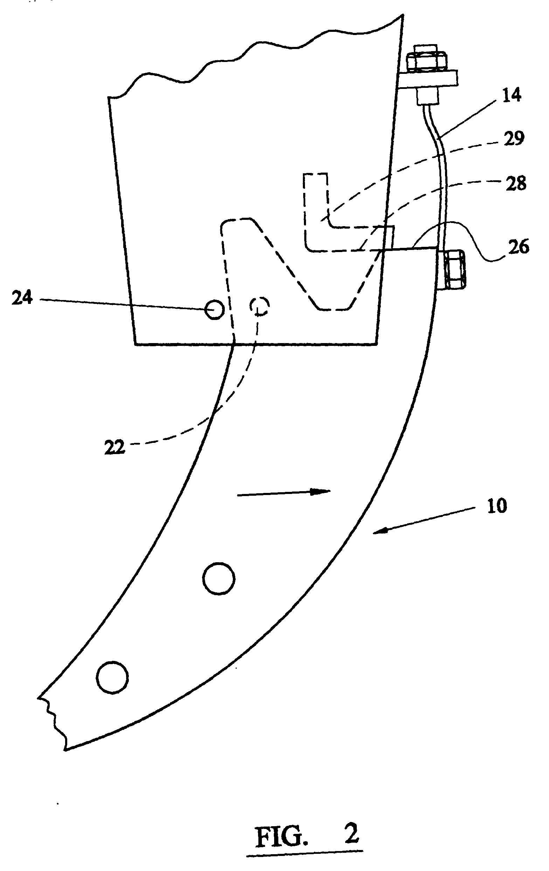

Figure 2 is a side view of the leg 10 and the leg clamp 12 just after their rigid connection has broken, and
Figure 3 is a side view of the leg 10 when connected to the leg clamp 12 only by a flexible link 14.

Although not shown, a traditional foot will be bolted to the lower end of the leg 12 with a wing being connected to the foot and with a point holder carrying a point being connected to the wing. Again, although not shown, the leg clamp will be connected to a plough being in a traditional manner. In use, the leg will be advanced in the direction of arrow 16 in order that the point can be ploughed through the ground.

Should the point encounter a rock, for instance, then the whole assembly will experience a shock loading having at least some component in the opposite direction to the arrow 16. As the components are rigidly connected to the plough beam which has considerable mass and momentum, unless this beam breaks parts of the plough will be damaged by that shock loading.

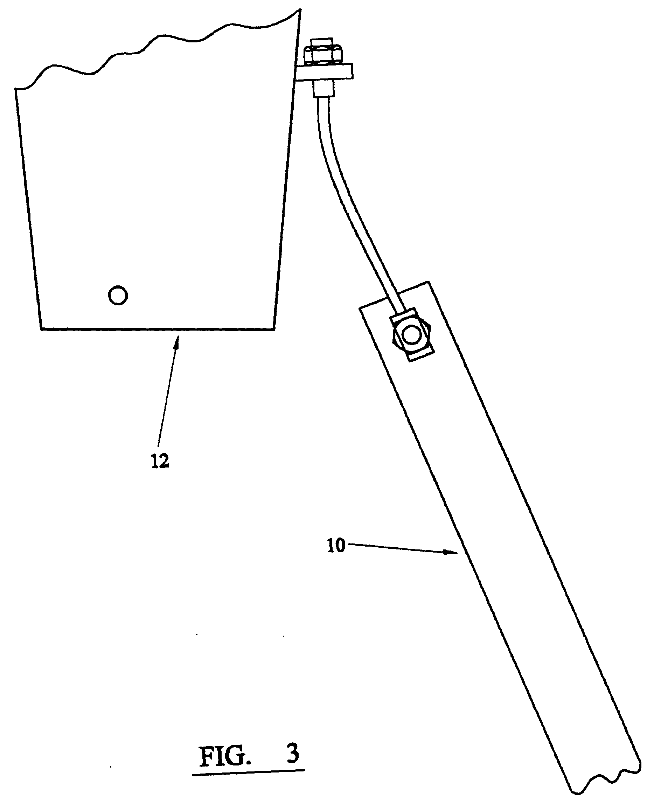

In order to minimise any damage that is done to the plough, an upper forward portion 18 of the leg is connected to the leg clamp by a shear bolt 20 that passes through openings 22 and 24 in the leg and leg clamp respectively (see Figure 3). That bolt is arranged to shear when the leg is subject to a predetermined force. The function after shearing will be described later.

During normal use the bolt 20 holds the leg 10 on the leg clamp 20. There will be a force during ploughing as the leg clamp urges the leg to pivot about the bolt 20 in an anticlockwise direction. The clamping force on the bolt may be sufficient, by itself to resist that pivotal force. Alternatively, and more likely, particularly when ploughing through heavy soil, that attempt to pivot the leg will be resisted by a horizontal abutment surface 26 formed on the top of the leg rearwardly of the portion 18, with a corresponding horizontal face 28 of a bracket 29 welded to the rear side of the leg clamp 28.

When the shock force on the bolt 20 is sufficient to shear the bolt the leg may at least initially move rearwardly or pivot about the surface 26 and the face 28 or both. The exact degree of movement is not important and will be dependent to a certain extent on the force that the point and any other parts are subject to by the rock and soil. Alternatively the leg may kick to the side of the leg clamp upon shearing of the bolt.

The shock force causes the surface 26 to bear against the face 28 to cause the shock to be imposed on the shear bolt.

The leg will still be connected to the clamp, but only by the flexible link 14 that is connected to the clamp and leg by bolts 30 and 32. The bolt 30 extends through a horizontal plate 34 that extends rearwardly from an upper region of the holder.

That flexible link 14 permits the leg and its attached parts to move freely relative to the remainder of the plough. The leg can twist, for instance, to move out of the plane that it is shown in and may even extend perpendicularly to that plane, as shown in Figure 3. That twisting movement may move the surface 26 to the side of the face 28 to allow the surface 28 to move upwardly. Alternatively, the surface 26 may slide rearwardly on the face 28 until it is clear of that surface. Accordingly, as soon as the bolt shears the connection of the leg becomes limp and the leg can trail over the soil.

The leg can be reattached in a ploughing position simply by passing a new shear bolt through the holes 22 and 24. As the bolt is sheared there is no problem in removing the bolt. Furthermore, the bolt will not have been bent thereby making removal difficult. In addition, if the threads of the bolt have been corroded such that nuts will not rotate that will be irrelevant as the sheared surfaces of the bolt can be tapped to allow the parts to be removed. Furthermore, as the leg does not have to pivot on the leg clamp during normal use, it will not matter if corrosion and dirt have caused the bolt to become effectively attached to either the leg or leg clamp.

The link 14 may be made of any suitable material such as steel wire.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A plough point mounting assembly comprising upper and lower portions of the assembly being connected by a member that is arranged to fail when the assembly is subject to a significant force, the assembly also including connecting means that permit movement of the lower portion relative to the upper portion after failure of the member characterised in that the movement permits the lower portion to move out of the plane that it is constrained to be in prior to failure of the member.

2. An assembly as claimed in Claim 1, wherein the movement is rotational or translational or both.

3. An assembly as claimed in Claim 1 or 2, wherein the connecting means comprises a flexible means.

4. An assembly as claimed in any preceding claim, wherein the upper and lower portions include cooperating abutment means arranged to resist relative rotational movement of the portions in at least one direction about the location that the member connects the portions.

5. An assembly as claimed in Claim 4, wherein the abutment means permits rleative sliding movement of the portions after failure of the member.

6. An assembly as claimed in Claim 3 or 4, wherein the abutment means is spaced from the member and comprises a plate on one portion arranged to abut a projection on the other portion.

7. An assembly as claimed in any of Claims 4 to 6, wherein the abutment means is arranged to resist relative rotational movement of the portions in a direction that would tend to move the lower portion of the assembly rearwardly and downwardly with respect to the other portion of the assembly and with respect to the intended direction of ploughing.

8. A method of using a plough point comprising upper and lower portions of the assembly that are normally securely connected together, the lower portion being arranged to move relative to the upper portion when the assembly is subject to a significant force characterised in that the lower portion moves out of the plane that it was constrained to be in prior to being subject to the significant force.

9. A method as claimed in Claim 8 comprising connecting the portions flexibly together wich that the portions can move in a translational and a rotational direction, after the portions have been subject to a significant force.

10. A method as claimed in Claim 8 or 9, wherein the portions are arranged to be able to move in directions that have components in three planes at right angles to each other.
